# FASCICULE DE BREVET EUROPEEN

(11) **EP 0 841 003 B1**
(45) Date de publication et mention de la délivrance du brevet: **04.04.2001**
(21) Numéro de dépôt: 97402661.9
(22) Date de dépôt: 06.11.1997
(51) Int. Cl.: A01K 1/01

(54) **Dispositif de raclage pour l'élimination des déchets**
Räumgerät zum Entmisten
Scraper device for the removal of excrements

(30) Priorité: 06.11.1996 FR 9613846
(43) Date de publication de la demande: 13.05.1998
(73) Titulaire: Sermap S.A., 25510 Pierrefontaine les Varans (FR)
(72) Inventeur: Millot, Simon, 25000 Besancon (FR)
(74) Mandataire: Ballot, Paul Denis Jacques

(56) Documents cités:
- EP-A- 0 473 051
- DE-U- 9 207 997
- FR-A- 2 718 606
- US-A- 3 680 166

## Description

La présente invention concerne un dispositif de raclage destiné à l'élimination de déchets répandus sur un sol présentant une surface régulière.

L'invention trouve une application particulièrement avantageuse dans le domaine de l'élevage animal, pour l'évacuation des fumiers ou des lisiers dans les couloirs d'exercices des étables.

On connaît de l'état de la technique deux grands types de dispositifs de raclage qui se singularisent par leur mode d'entraînement, et ceci quelle que soit la forme proprement dite du racle utilisé, c'est-à-dire droite ou en V.

Comme leur nom le suggère, les dispositifs à entraînement hydraulique utilisent un vérin pour actionner, selon un mouvement alternatif, un rail central chargé de tirer et de guider un racle le long d'un couloir d'exercices. Le racleur avance par pas au moyen d'un système à cliquet coopérant avec une série de lumières ménagées le long du rail ; son retour s'effectuant par inversion mécanique dudit cliquet.

Une telle réalisation présente cependant un inconvénient majeur puisque son installation doit de préférence être prévue dès la conception des bâtiments et des sols. A défaut, il est en effet nécessaire de casser le génie civil de l'aire de raclage, afin de ménager une rainure pour le passage du rail et d'implanter une série d'organes aptes à guider ce dernier et à l'empêcher de se soulever. Ces opérations de grande ampleur imposent par ailleurs une précision difficile à atteindre en maçonnerie courante, ainsi que le non fonctionnement prolongé de toute l'installation.

Le groupe d'entraînement chargé du déplacement du rail doit en outre se positionner nécessairement dans l'axe du couloir, c'est-à-dire généralement du côté de la fumière afin de pouvoir avantageusement tirer les déchets plutôt que de les pousser. Une telle disposition implique, soit la réalisation d'un support pour installer le groupe au dessus de la fosse, soit de prévoir un génie civile pour le placer en dessous du rail. Dans les deux cas, toute intervention pour dépannage ou maintenance apparaît alors compliquée, voire dangereuse. La présence du groupe d'entraînement au-dessus de la fosse est également une gène pour la reprise du fumier à l'aide d'un tracteur à fourche par exemple.

Le second type de dispositif de raclage est quant à lui constitué par les racleurs à entraînement par chaîne. Cette dernière est montée en circuit continu autour de poulies d'angle formant pignons d'engrènement. Fixé aux deux extrémités de ladite chaîne, le racle est guidé par une rainure ménagée dans le sol. En fin de course, le dispositif de raclage vient prendre appui contre une butée à ressort. Le système détecte alors l'effort excessif exercé par le moteur et inverse le sens (course aller) ou arrête le moteur (course retour).

Tout comme la première, cette forme de réalisation nécessite des travaux de génie civil relativement conséquents afin de permettre notamment le guidage du racleur, et plus généralement la mise en place précise des différents composants (groupe d'entraînement, poulies, etc.). Elle est en outre sujette à d'importants phénomènes d'usure, avant tout au niveau de la chaîne mais également au niveau des pignons d'entraînement ; ces détériorations imposant de retendre régulièrement ladite chaîne, voire de la remplacer à plus ou moins long terme. Pour toutes ces raisons, le coût des dispositifs de raclage à entraînement par chaîne apparaît trop élevé.

Bien que relativement rustiques, ces deux types de racleurs occupent pourtant une position commercialement dominante dans un domaine où l'innovation est rare. Cependant, on a cherché récemment à éviter les problèmes engendrés par l'utilisation de tels dispositifs, et notamment les longs et onéreux travaux de génie civil ainsi que l'encombrement important des mécanismes d'entraînement. Dans cette optique, on a pensé à réaliser des dispositifs de raclage automoteurs, c'est-à-dire capables de se déplacer par leurs propres moyens.

Le brevet français FR 2 718 606 décrit un appareil selon le préambule de la revendication 1, fonctionnant sur ce principe. Le racleur en question est doté pour cela d'un moteur électrique alimenté par batteries, l'ensemble étant monté au centre d'un châssis allongé de forme sensiblement trapézoïdale. Le grand côté de cette structure reçoit un train de roues motrices exerçant leur action directement sur la surface à traiter, tandis qu'à l'opposé, le petit côté est doté d'un organe de guidage central. Des raclettes droites ou en V sont fixées sur la partie avant du racleur, c'est-à-dire à proximité des roues motrices chargées du déplacement par adhérence.

Ce type de dispositif présente toutefois l'inconvénient d'offrir une motricité insuffisante même dans des conditions d'utilisation normales, c'est-à-dire lorsque l'aire de raclage est encombrée d'une quantité raisonnable de déchets et/ou qu'elle est rendue glissante en raison de la consistance spécifique de ces derniers. Afin de palier ce problème, la seule solution proposée consiste à alourdir fortement le châssis de manière à augmenter l'adhérence des roues. Cette nécessité à pour conséquence l'utilisation impérative d'un moteur de puissance bien supérieure et par là-même l'accroissement du nombre de batteries d'alimentation. L'encombrement général, le prix de revient ainsi que le coût d'exploitation sont ainsi directement affectés, jusqu'à atteindre des niveaux incompatibles avec les attentes des utilisateurs potentiels.

Le document DE 92 07 997 décrit un dispositif de raclage destiné exclusivement à l'élimination des déchets présents à la surface d'un plancher rainuré. Cette restriction est due au fait que la propulsion de ce racleur s'effectue par engrènement, tel un système à crémaillère. En effet, chaque roue motrice est pourvue de palettes radiales ou de tout autre élément saillant apte à coopérer par engrènement avec les rainures ménagées dans le sol ; la roue motrice et le plancher rainuré jouant alors en quelque sorte le rôle respectivement de pignon et de crémaillère. La roue proprement dit ne constitue qu'un support de roulage et seules les palettes assurent la motricité. Cette dernière fonction s'effectue par poussé, à prise d'appui contre les parois latérales des rainures successives. Cette conformation ne permet cependant pas à un tel racleur de fonctionner sur tous types de surface et notamment celles ne présentant aucunes aspérités. Le fait que le domaine d'application soit aussi restreint constitue à n'en pas douter un inconvénient majeur.

Aussi, le problème technique à résoudre par l'objet de la présente invention est de proposer un dispositif de raclage automoteur destiné à l'élimination de déchets présents à la surface d'un couloir d'exercices d'une étable, comportant des moyens moteurs aptes à entraîner en rotation au moins une roue motrice agissant par adhérence et exerçant son action directement sur la surface à traiter, des moyens de guidage permettant de suivre une trajectoire déterminée dans le couloir d'exercices, ainsi que des moyens de raclage aptes à vernir au contact de la surface à traiter afin de désolidariser puis de pousser les déchets lors de l'avance du racleur, dispositif de raclage qui permettrait d'éviter les problèmes de l'état de la technique en étant apte à traiter n'importe quel type de surface, en offrant une adhérence optimale pour chaque roue motrice malgré des dimensions d'ensemble fortement diminuées, tout en garantissant des coûts d'achat et de fonctionnement tout aussi réduits.

La solution au problème technique posé consiste, selon la présente invention, en ce que ledit dispositif de raclage présente un centre de gravité situé à proximité de l'axe de rotation de chaque roue motrice, c'est-à-dire à une distance inférieure au rayon de ladite roue motrice.

L'invention telle qu'ainsi définie présente l'avantage d'offrir une répartition quasi idéale de la masse, c'est-à-dire permettant à la force qui est associée à ladite masse, à savoir le poids, de s'exercer directement au niveau de chaque roue motrice utilisée dont le potentiel d'adhérence au sol se voit ainsi optimisé de manière maximale. Cela n'est précisément pas le cas avec le dispositif de raclage de l'art antérieur puisque la disposition longitudinale de la majorité de ses éléments constitutifs tend à répartir le poids dans un plan horizontale, sans le concentrer à l'endroit où il est le plus utile, c'est-à-dire à proximité immédiate des roues motrices. Il en résulte qu'à masse égale, le racleur objet de la présente demande bénéficie d'une adhérence et donc d'une motricité très supérieures à celles offertes par le dispositif de l'antériorité. En d'autres termes, il nécessite une masse bien inférieure pour atteindre un niveau d'adhérence déterminé, considéré comme suffisant. Cela permet d'une part, de réduire l'encombrement général du dispositif de manière significative, et d'autre part, d'avoir recours à des moyens moteurs de plus faible puissance, par conséquent plus économes en énergie.

Selon une particularité de l'invention, le dispositif de raclage présente, parallèlement à sa direction de déplacement, une largeur inférieure ou égale à la valeur correspondant à deux fois le diamètre de chaque roue motrice. Cette caractéristique avantageuse permet de recentrer encore d'avantage les masses au niveau de chaque roue motrice afin d'en accroître l'adhérence au sol.

Selon une autre particularité de l'invention, la hauteur du dispositif de raclage est sensiblement égale au diamètre de chaque roue motrice. L'objectif premier est ici d'abaisser au maximum le centre de gravité mais cette caractéristique structurelle, tout comme la précédente, participe également au centrage optimal des masses ainsi qu'à la réduction notable de l'encombrement global.

Au final, le dispositif de raclage se présente sensiblement sous la forme d'une poutre automotrice se déplaçant transversalement, c'est-à-dire suivant une direction orthogonale à sa plus grande longueur. Cette poutre présente par ailleurs une largeur et une hauteur réduites, définies en fonction des dimensions des roues motrices, de sorte que chacune de ces dernières occupe en section une grande partie de l'espace interne disponible. Le dispositif est par conséquent suffisamment compact pour être franchi aisément par les animaux lorsqu'il fonctionne en leur présence, tout en bénéficiant, pour une motricité optimale, de roues d'un diamètre maximal par rapport à l'espace disponible.

De manière particulièrement avantageuse, toutes les roues motrices agissant par adhérence sont disposées parallèlement les unes aux autres afin que leurs axes de rotation respectifs soient communs. Cette disposition permet une répartition homogène de la masse et par conséquent une adhérence identique pour chacune d'entre elles. Ainsi pourvu, le dispositif de raclage se trouve tout naturellement en déséquilibre permanent, ce qui impose la présence de moyens de stabilisation afin d'empêcher toute rotation autour dudit axe de rotation unique.

Selon une autre particularité de l'invention, les moyens de stabilisation en question peuvent être constitués de manière particulièrement avantageuse par les moyens de guidage du dispositif de raclage.

La description qui va suivre en regard des dessins annexés, donnés à titres d'exemples non limitatifs, fera bien comprendre en quoi consiste l'invention et comment elle peut être réalisée.

La figure 1 est une vue en perspective d'un dispositif de raclage selon un mode de réalisation particulier de l'invention.

La figure 2 représente une vue de dessus du dispositif de raclage illustré à la figure 1

Les figures 3 et 4 constituent des coupes transversales représentant un système de levage des moyens de raclage, selon un mode de réalisation particulier de l'invention.

Les figures 5 et 6 sont des vues, respectivement en coupe longitudinale et de dessus, d'un mécanisme d'ouverture forcée de volets.

Les figures 7 et 8 représentent des vues, respectivement de côté en coupe partielle et de dessus, de moyens de guidage conformes à l'invention.

La figure 9 est une vue de dessus du dispositif illustré à la figure 1, illustrant plus particulièrement le principe de fonctionnement d'un système de détection d'obstacles.

La figure 10 constitue une vue en perspective d'une variante de réalisation du dispositif de raclage de la figure 1.

La figure 11 représente en perspective un système de levage des moyens de raclage, selon une variante de réalisation actuellement préférée de l'invention.

Pour des raisons de clarté, les mêmes éléments ont été désignés par des références identiques. De même, seules les éléments essentiels pour la compréhension de l'invention ont été représentés, et ceci sans respect de l'échelle et de manière schématique.

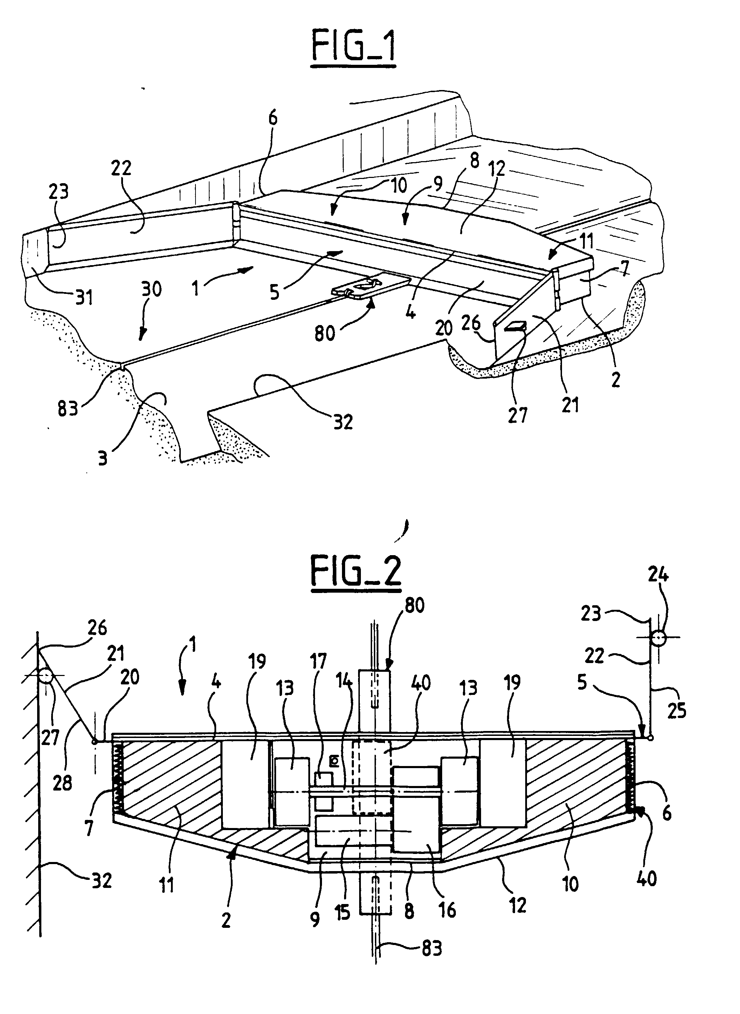

Ainsi qu'on peut le voir sur la figure 1, le dispositif de raclage 1 se présente sous la forme d'un bâti métallique 2 allongé, apte à se déplacer transversalement à la surface 3 d'un couloir d'exercices 30. Cette structure en forme de poutre comporte une face avant 4 rectiligne destinée à recevoir des moyens de raclage 5, deux bords latéraux 6, 7 de faibles longueurs et disposés parallèlement l'un par rapport à l'autre, une face arrière 8 de forme brisée délimitant schématiquement une partie centrale 9 et deux parties latérales 10, 11 symétriques, ainsi qu'un couvercle 12 rigide et basculant afin de pouvoir respectivement supporter la masse de l'utilisateur ou d'un animal et permettre toute intervention sur les composants internes du racleur 1.

La figure 2 représente le positionnement relatif desdits composants selon un mode de réalisation particulier conforme à l'invention, dans lequel la majorité des éléments mécaniques est regroupée dans la partie centrale 9 du bâti 2. On y retrouve deux roues motrices 13 à bandage caoutchouc solidarisées à un même arbre de transmission 14, lequel est entraîné par un moteur électrique 15 via un réducteur 16 ; l'autre extrémité de l'arbre 14 étant supportée par un palier 17. On distingue également, au centre et contre la face avant 5, un système de levage à cliquet 40 susceptible de relever avantageusement les moyens de raclage 5 de manière automatique lorsque le dispositif 1 est en marche arrière.

Chaque partie latérale 10, 11 est quasiment entièrement massive. Les seuls espaces disponibles étant réservés, d'une part, au passage d'une des deux roues motrices 13, et d'autre part, à l'implantation d'une batterie 19 rechargeable destinée à l'alimentation du moteur électrique 15. Bien entendu, d'autres types de moyens moteurs peuvent être utilisés pour entraîner les roues 13, étant entendu que dans tous les cas de figure, ils doivent pouvoir être alimentés par une source énergétique stockée à même le dispositif de raclage 1.

Dans cet exemple de réalisation, les moyens de raclage 5 sont constitués par une lame 20 formant racle disposée sur chant parallèlement à l'axe de rotation des roues 13. Ladite lame 20 est par ailleurs montée flottante le long de la face avant 4, c'est-à-dire mobile en translation dans un plan sensiblement vertical de manière à venir par simple gravité au contact de la surface 3 à traiter. Chacune de ses extrémités est pourvue d'un volet 21, 22 monté verticalement pivotant, le volet gauche 21 étant sur la figure 2 en position déployée de raclage, tandis que le volet droit 22 est en position retour. Comme chacun d'entre eux est articulé librement, sa mise en place dans l'une ou l'autre des positions s'effectue automatiquement lors du déplacement du racleur 1.

Dans le cas présent et lors d'une marche avant, le volet 22 va s'écarter de sa position sous l'effet des frottements puis s'ouvrir progressivement jusqu'à ce que son extrémité libre 23 vienne au contact du bord vertical 31 du couloir d'exercice 30. Un galet 24, disposé de manière adéquate sur la face externe 25 du volet 22, assure avantageusement un appui avec un minimum de frottements. La position obtenue correspond alors à celle du volet 21 sur la figure 2, dans laquelle le galet 27 fixé sur la face externe 28 assure la quasi totalité de l'appui, l'extrémité 26 affleurant simplement le bord 32 du couloir 30. Dès que le racleur 1 est mis en marche arrière, le volet 21 revient par frottements à la position de retour, c'est-à-dire parallèlement à la direction de déplacement.

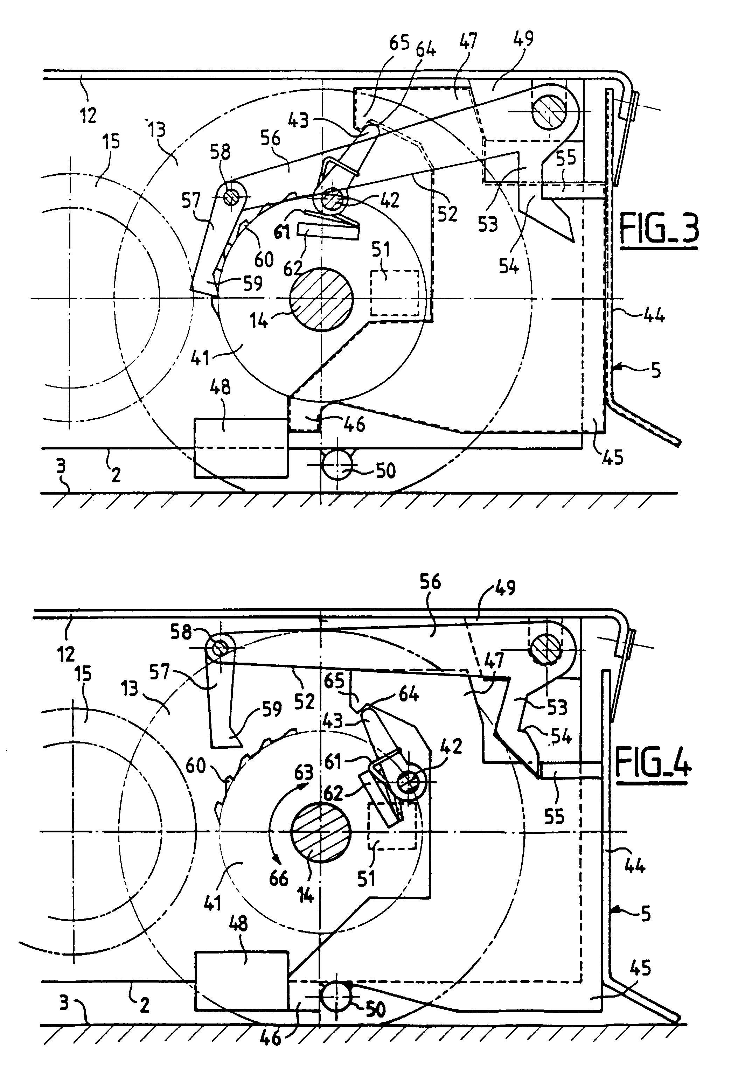

Afin de ne pas entraîner lors de son retour, les déchets nouvellement déposés sur l'aire de raclage 3 juste après son passage aller, le racleur 1 est avantageusement doté de moyens de levage 40 aptes à relever automatiquement les moyens de raclage 5 pendant toute la durée de la phase de marche arrière. Le mécanisme représenté aux figures 3 et 4 ne constitue qu'un mode de réalisation particulier susceptible d'être remplacé par tout système équivalent aptes à remplir la même fonction.

Sur ces deux représentations en coupes transversales, on distingue notamment le moteur 15 chargé d'entraîner en rotation l'arbre de transmission 14 sur lequel sont solidarisées les roues motrices 13, une roue dentée 41 ainsi qu'une chape d'articulation 42 d'une came 43. Les moyens de raclage 5 sont ici constitués par un simple racle 44 monté flottant par rapport au bâti 2, par l'intermédiaire d'une pièce support 45 dotée de parties 46, 47 aptes à coopérer avec des organes de guidage 48, 49 solidaires dudit bâti 2. Le coulissement vertical de l'ensemble racle 44-support 45 est limité en parties basse et haute par des butées respectivement 50 et 51.

Un levier de déverrouillage 52 présentant sensiblement une forme en L est monté pivotant, au niveau de sa partie centrale, à la partie supérieure du bâti 2. Son bras 53 le plus court présente une extrémité formant crochet 54, apte à coopérer avec une patte 55 solidaire de la pièce support 45. L'extrémité libre du bras 56 le plus long est quant à elle pourvue d'un doigt 57 monté mobile en rotation par l'intermédiaire d'une chape 58. Le bras 56 s'étendant au-dessus de la roue dentée 41, l'extrémité libre 59 du doigt 57 présente une forme apte à coopérer par emboîtement partiel avec les dents 60 de ladite roue dentée 41.

On note par ailleurs que la came 43 est maintenue dans une position sensiblement tangentielle à la roue dentée 41 au moyen d'un ressort 61 prenant appui sur une patte support 62.

Lorsque le racleur 1 est au repos, le positionnement relatif des différents éléments constitutifs des moyens de levage 40 correspond à la disposition illustrée à la figure 3, à l'exception de la came 43 qui adopte la position représentée à la figure 4. Le levier de déverrouillage 52 maintien relevé le racle 44 via la pièce support 45, par l'intermédiaire du crochet 54 retenant la patte 55. La pièce support 45 est par conséquent bloquée en position haute par la butée supérieure 51. Ses parties 46, 47 destinées au guidage vertical sont en contact avec les organes 48, 49 solidaires du bâti 2. Le bras 52 est basculé à proximité de la roue dentée 41 de sorte que l'extrémité libre 59 du doigt 57 est prise entre deux dents 60 successives.

Dès que le dispositif de raclage 1 se met en marche avant, la roue dentée 41 est entraînée en rotation dans le sens 63. Ce mouvement provoque alors au niveau du doigt 57 une poussée apte à faire pivoter le levier 52 dans le même sens, désengageant par conséquent le crochet 54 de la patte 55. La pièce support 45 ainsi déverrouillée tombe jusqu'à venir au contact de la butée inférieure 50, le racle 44 étant alors au contact du sol 3. La patte 55, restant au contact de l'extrémité du crochet 54, permet de maintenir le levier de déverrouillage 52 de telle sorte que le doigt 57 ne peut plus coopérer avec les dents 60 de la roue dentée 41 (figure 4). La came 43 demeure dans sa position tangentielle durant pratiquement toute la rotation à chaque tour, elle ne s'efface en basculant vers l'intérieur que lorsque son extrémité libre 64 vient au contact d'une partie 65, formant encoche, de la pièce support 45.

Lorsque le sens de marche du racleur 1 est inversé, la came 43 tourne dans le sens 66 autour de l'arbre 14. Tôt ou tard, son extrémité libre 64 vient s'engager dans l'encoche 65 puis soulever progressivement la pièce support 45 guidée par les organes 48, 49, relevant ainsi le racle 44 à une hauteur correspondant à la garde au sol du racleur 1. Durant ce déplacement, la patte 55 n'est plus en mesure de maintenir le levier 52. Celui-ci bascule donc vers le bas sous l'effet de sa propre masse jusqu'à ce que la pièce support 45 vienne prendre appui contre la butée supérieure 51. A ce moment là, la patte 55 est à nouveau liée avec le crochet 54, l'extrémité libre 59 du doigt 57 suivant le contour de la roue dentée 41 en pleine rotation. Progressivement, la came 43 va se désengager de l'encoche 65 en basculant autour de son axe, puis revenir dans sa position d'origine à l'aide du ressort 61. La pièce support 45 est alors maintenue en partie haute par le levier 52 comme précédemment. Au tour suivant la came 43 ne peut venir au contact de la pièce support 45 en raison d'un écartement trop important.

On peut remarquer que l'organe de guidage 48, constituant le point d'appui principal du racle 44 lors de la poussée, est positionné avantageusement à la partie la plus basse du bâti 2 afin de contrer efficacement le couple engendré par la rotation des roues 13.

Cette faculté qu'ont les moyens de raclage 5 de se relever peut être avantageusement utilisée pour commander une ouverture forcée des volets 21, 22. En effet, si ces derniers sont orientés avec un angle nul par rapport à la direction de déplacement du racleur 1, il devient alors improbable qu'ils s'ouvrent correctement lors du démarrage en marche avant, c'est-à-dire dans le bon sens et avec une rapidité suffisante. Le mécanisme adopté peut constituer en un système de biellettes reliant chacun d'entre eux à un des éléments mobiles du système de levage 40.

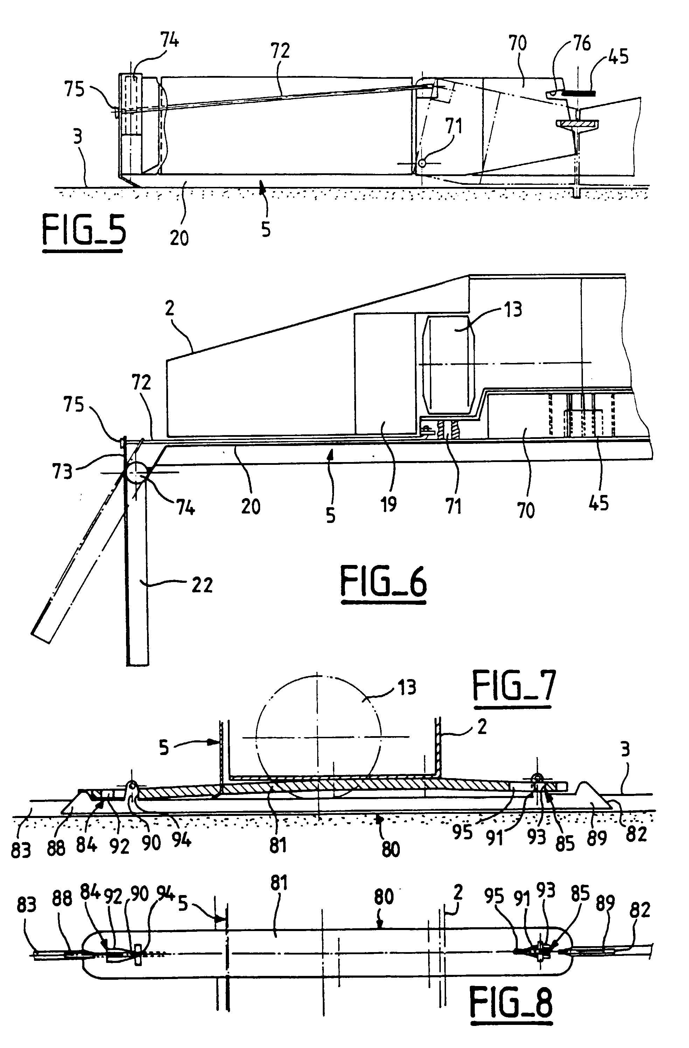

Comme la force à exercer doit être relativement importante, on peut prévoir un système plus complexe utilisant une masse mobile 70 dont le déplacement serait commandé par exemple par la translation de la pièce support 45. Conformément aux figures 5 et 6, cette pièce intermédiaire 70 est montée basculante à sa partie inférieure par une chape 71 solidaire du bâti 2. Une tige 72, fixée sensiblement à la verticale de la chape 71, est reliée à une partie 73 du volet 22, située en arrière de l'axe de rotation 74. Cette dernière liaison n'est pas permanente puisque la tige 72 coopère par coulissement avec une lumière de forme adéquate, ménagée à travers ladite partie 73. L'extrémité libre de la tige 72 présente simplement une excroissance 75 formant butée, de manière à pouvoir tirer sur le volet 22. La pièce intermédiaire 70 présente également, sur le côté opposé à celui de la chape 71, une encoche 76 apte à coopérer par emboîtement avec une partie de la pièce support 45.

Lorsque le dispositif de raclage 1 est en phase repos, la pièce 45 maintient la pièce intermédiaire 70 formant masse en position haute, c'est-à-dire celle correspondant au contour en traits pleins de la figure 5. La tige 72 est par conséquent repoussée au maximum, le volet 22 étant parallèle à la direction de déplacement du racleur 1. Comme il est monté mobile en translation le long de son axe de rotation 74, le volet 22 repose à la surface du sol 3 contrairement au racle 44.

Dès la mise en marche avant, la pièce support 45 solidaire du racle 44 tombe comme décrit précédemment, permettant ainsi la mise en rotation de la masse 70 qui pivote alors sous l'effet de son propre poids contour en pointillés sur la figure 5). Ce mouvement de pivotement engendre une traction le long de la tige 72, ce qui contraint alors le volet 22 à s'ouvrir.

Lors d'une marche arrière, la masse 70 est ramenée à sa position initiale, toujours par la pièce support 45. La tige 72 est à nouveau repoussée au maximum, de sorte qu'elle n'entrave pas la rotation du volet 22 qui peut ainsi revenir librement dans une position correspondant à celle de la phase repos, sous l'effet des frottements au sol. Cette disposition autorise plus de dégagement latéral, moins de frottements et par conséquent moins de bruits.

Les systèmes de guidage connus, et notamment ceux utilisant le principe du guidage central, peuvent bien évidemment être adaptés sur le dispositif de raclage 1 objet de la présente invention. Cependant, selon une autre caractéristique de cette dernière, il est particulièrement avantageux de concevoir un système de guidage dont l'action s'exerce systématiquement et majoritairement au niveau d'une zone située en avant de l'axe de rotation des roues motrices 13, et ceci quel que soit le sens de déplacement du racleur 1. Cette particularité permet d'accroître le pouvoir directeur des moyens de guidage 80, tout en limitant les frottements parasites.

Les figures 7 et 8 illustrent un tel dispositif, selon un mode de réalisation préféré de l'invention. Les moyens de guidage 80 sont ici constitués d'un élément support 81 fixe sous lequel est montée une lame de guidage 82 mobile ; cette dernière coopérant par glissement avec une rainure 83 de forme sensiblement complémentaire, ménagée à la surface 3 de l'aire de raclage. Le déplacement relatif de la lame de guidage 82 par rapport à l'élément support 81 est longitudinalement et transversalement limité dans l'espace. Cependant, si la mobilité longitudinale est totalement libre, celle concernant l'axe transversal l'est partiellement. En d'autres termes, elle est uniquement localisée à la partie de ladite lame de guidage 82 située en arrière de l'axe de rotation de chaque roue motrice 13, pour un sens de déplacement donné.

L'élément support 81 de forme allongée est solidaire du bâti 2, suivant une position perpendiculaire à l'axe de rotation des roues motrices 13. Il présente par ailleurs deux lumières 84, 85 de formes identiques, disposées en vis-à-vis à chacune de ses extrémités 86, 87.

La lame de guidage 82 est quant à elle totalement rectiligne et plane. Ses deux extrémités 88, 89 sont taillées en biseau afin de ne pas offrir d'arrêts saillantes en partie supérieure. Elle présente également deux pattes de guidage 90, 91, espacées de la même manière que les lumières 84, 85, ceci afin de pouvoir s'y engager et s'y déplacer convenablement à l'intérieur. La course du déplacement relatif longitudinal correspond à la longueur desdites lumières 84, 85.

On observe, notamment sur la figure 8, que la forme de chaque lumière 84, 85 n'est pas constante. L'extrémité 92, 93 la plus externe présente une largeur bien supérieure à l'épaisseur de la patte de guidage 90, 91 correspondante, tandis que ces mêmes dimensions sont sensiblement identiques dans le cas de l'extrémité 94, 95 la plus interne. Il en résulte que, suivant la position de la patte 90, 91 à l'intérieur de la lumière 84, 85, la lame 82 se trouve respectivement mobile transversalement ou bloquée suivant cette direction. La course du déplacement relatif transversal correspond à la largeur des extrémités externes 92, 93.

Par conséquent, lorsque le dispositif de raclage part en marche avant, la lame 82 va dans un premier temps glisser vers l'arrière par rapport au support 81. Elle est ensuite entraînée en translation le long de la rainure 83 puisque les pattes de guidage 90, 91 sont longitudinalement en butée ; cette phase correspondant précisément aux figures 7 et 8. On voit que la patte 90 est complètement immobilisée en raison du fait qu'elle est engagée dans la partie la moins large de la lumière 84. A contrario, la patte 91 bénéficie d'une liberté perpendiculairement à la direction de déplacement puisqu'elle occupe la partie la plus large de la lumière 85. Il en résulte que l'essentiel du guidage est réalisé en amont du racleur 1, seule la partie avant de la lame 82 étant en effet suffisamment maintenue pour assurer parfaitement cette fonction. Cette particularité avantageuse permet de diminuer notablement les frottements de la lame 82 contre la rainure 83, par exemple quand l'alignement du dispositif de raclage 1 n'est par correct ou que ladite rainure n'est pas rectiligne.

Lors du passage en marche arrière, les phénomènes inverses se produisent. La lame 82 glisse dans l'autre sens, libérant ainsi la patte 90 qui peut alors débattre transversalement pour ne pas perturber le guidage. La quasi totalité de celui-ci est par conséquent assurée par l'autre partie de la lame 82 qui est immobilisée à son tour, par l'intermédiaire de la patte de guidage 91 engagée dans la portion 95 de la lumière 85.

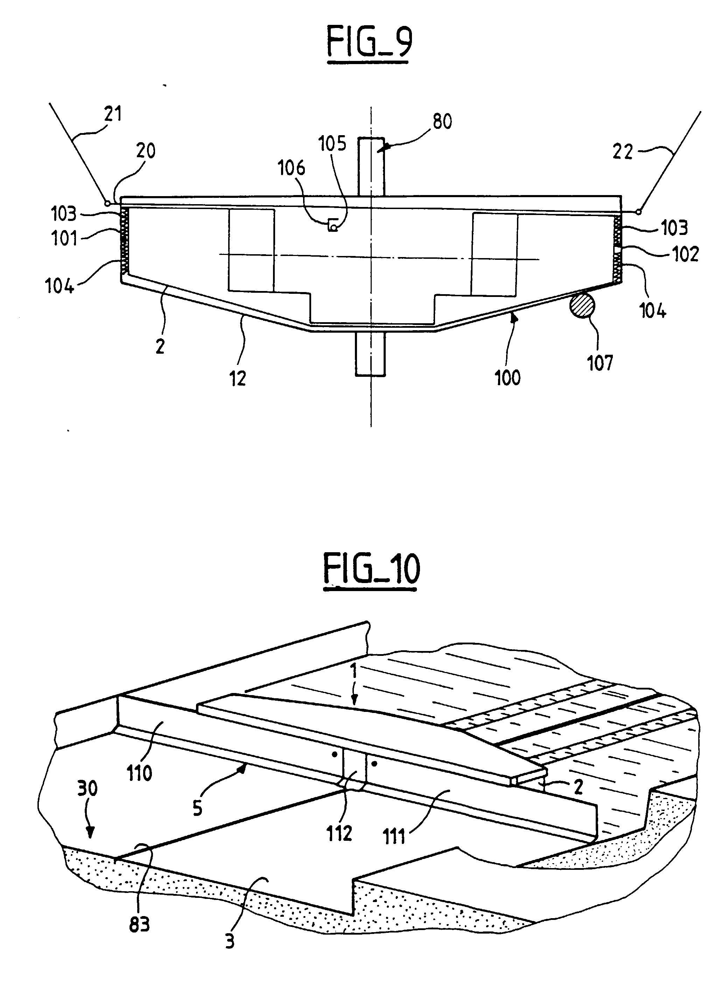

Le système de détection d'obstacles 100 visible sur la figure 2 est quant à lui représenté de manière plus précise sur la figure 9. Dans ce mode de réalisation préféré, l'élément mobile, destiné à entrer en contact avec l'obstacle, est constitué avantageusement par le couvercle 12 monté flottant sur le bâti 2, dans un plan horizontal et suivant la direction de déplacement du dispositif de raclage 1. le couvercle 12 est maintenu à une position moyenne, c'est-à-dire qu'il est capable de se déplacer de manière identique dans des directions opposées, sensiblement parallèle à ladite direction de déplacement du racleur 1. Pour cela, chacune de ses extrémités 101, 102 est reliée à deux ressorts 103, 104 disposés longitudinalement en vis-à-vis, leur autre bout étant solidaire du bâti 2.

le détecteur proprement dit est constitué par un simple capteur à contact composé d'un élément statique 105 solidaire du bâti 2 et d'un élément 106 en forme de U, considéré comme mobile puisque solidarisé au couvercle 12 monté flottant. L'ensemble coopérant avec des moyens électroniques non représentés mais aptes à déclencher une procédure de sécurité déterminée. Lorsque le dispositif de raclage 1 rencontre un obstacle 107, par exemple lors d'une marche arrière dans le cas de la figure 3, le couvercle 12 se déplace alors dans le sens opposé à cette contrainte avec éventuellement un léger phénomène de vrillage. Le ressort 103 le plus éloigné de l'obstacle se comprime alors, amortissant par la même en partie l'impact. Le déplacement du couvercle 12 engendre intrinsèquement celui de l'élément en U 106. Ce dernier vient alors au contact de l'élément statique 105, provoquant par la même le déclenchement de la procédure de sécurité qui peut comprendre notamment l'immobilisation instantanée du racleur 1 et/ou le déclenchement d'un signal lumineux et/ou l'émission d'un signal sonore, etc.

Cette procédure de sécurité, ainsi que les organes d'avertissement qui y sont associés, sont gérés par des moyens électroniques non représentés. De manière particulièrement avantageuse, la carte de régulation utilisée est également employée pour le contrôle du fonctionnement global du dispositif de raclage 1. Cela concerne notamment la gestion de l'alimentation et du sens de marche du moteur électrique 15 d'une part, et la recharge des batteries électriques 19 d'autre part. Dans le premier cas, le racleur 1 est doté d'au moins un capteur apte à détecter les extrémités du couloir d'exercice 31. La recharge peut quant à elle être effectuée avec ou sans contact électromécanique, selon que le raccordement sur l'installation électrique du bâtiment est de type classique ou par induction. Dans la seconde hypothèse, le système de recharge par induction utilisé peut servir également de détecteur de position moyennant quelques adaptations à la portée de l'homme de l'art. De manière particulièrement avantageuse, une telle configuration permet de se passer du classique capteur de position précédemment évoqué, dont le fonctionnement est susceptible d'être perturbé par celui du système de recharge par induction. L'ensemble de ces opérations peut bien évidemment être automatisée par une programmation adéquate desdits moyens électroniques.

Naturellement, et comme il ressort déjà amplement de ce qui précède, l'invention n'est en rien limitée aux modes particuliers de réalisation qui ont été décrits à titre d'exemples préférés dont elle englobe toutes les variantes restant dans le cadre de la portée des revendications.

C'est notamment le cas en ce qui concerne les moyens de raclage 5 qui peuvent, conformément à la figure 10, se présenter avantageusement sous la forme de deux lames rétractables 110, 111 disposées sur chant parallèlement à l'axe de rotation de chaque roue motrice. Comme pour le premier mode de réalisation précédemment décrit, ces lames 110,111 sont montées verticalement flottantes sur la face avant 4 du bâti 2, et sont aptes à coopérer avec des moyens de levage automatiques 40. Mais elles sont de plus mobiles en translation longitudinale l'une par rapport à l'autre par coopération avec au moins un moyen de rappel élastique capable de les repousser mutuellement dans des directions opposées, parallèlement à l'axe de rotation des roues. Afin d'éviter les problèmes d'encrassement dans la zone centrale d'écartement, les extrémités internes des deux lames 110, 111 se chevauchent partiellement et de manière permanente en 112.

De la même manière, en ce qui concerne plus particulièrement les moyens de levage 40, le système purement mécanique illustré sur les figures 3 et 4 peut être avantageusement remplacé par un mécanisme indépendant de la mise en rotation des roues motrices. Selon un mode de réalisation actuellement préféré de l'invention, le relevage des moyens de raclage 5 est réalisé par l'intermédiaire de deux pièces basculantes 120, 121 actionnées par un vérin électrique 122.

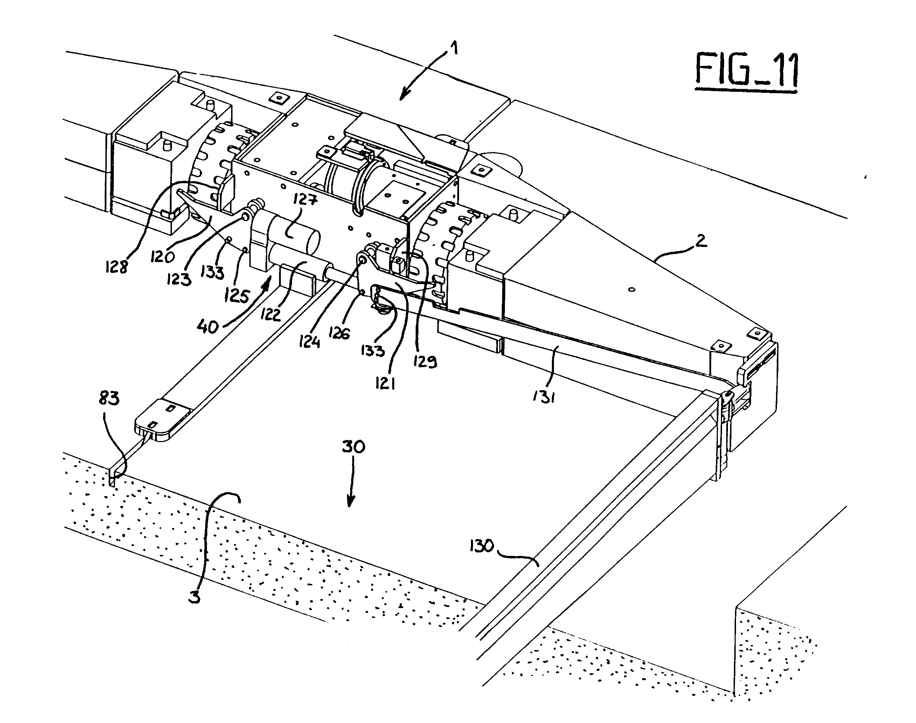

Ainsi qu'on peut le voir sur la figure 11, chaque pièce basculante 120, 121 est montée mobile en rotation sur le bâti 2, autour d'un pivot 123, 124 disposé orthogonalement au plan dans lequel le racle non représenté est destiné à être déplacé. Le vérin électrique 122 est quant à lui monté totalement flottant entre les deux pièces basculantes 120, 121. Pour cela, chacune de ses extrémités est reliée à l'une des pièces basculantes 120, 121 via un axe 125, 126 disposé parallèlement mais à distance du pivot 123, 124 correspondant, afin de pouvoir engendrer un effet de levier. Comme le vérin 122 ne dispose d'aucun point fixe, les forces qu'il génère sont réparties de manière égale à ses deux extrémités, de sorte que les pièces basculantes 120, 121 sont animées simultanément de mouvements complètement symétriques.

L'ensemble est ménagé de telle sorte que lorsque le vérin 122 est rétracté, les pièces basculantes 120, 121 ne sont pas au contact des moyens de raclage 5 qui peuvent ainsi reposer librement sur le sol par gravité. Par contre, dès que le vérin 122 va être actionné via son moteur électrique 127, les pièces basculantes 120, 121 vont être entraînées en rotation autour de leurs pivots respectifs 123, 124. Au cours de ces mouvements inverses, elles vont venir progressivement soulever les moyens de raclage 5 jusqu'à atteindre une position relevée correspondant à la mise en appui desdites pièces basculantes 120, 121 contre des butées 128, 129 solidaires du bâti 2. Le maintien dans cette position extrême est assuré par le vérin 122 qui est alors presque totalement déployé conformément à la figure 11.

De manière particulièrement avantageuse, le vérin électrique 122 est utilisé pour commander le déplacement des volets articulés 130, montés mobiles en rotation aux extrémités latérales du bâti 2. Concrètement, l'ouverture ou la fermeture de chaque volet 130 s'effectue respectivement par traction ou poussée sur une tige 131, comme dans le mode de réalisation illustré aux figures 5 et 6. Dans le principe, seule la manière dont est actionnée chaque tige 131 est différente. En effet, la mise en mouvement de cet organe est ici commandée simplement par le vérin électrique 122 puisque l'extrémité de chaque tige 131 est montée mobile en rotation sur l'une des pièces basculantes 120, 121 via des axes 132, 133. Aussi, dès que les moyens de levage 40 vont être actionnés, la mise en rotation des pièces basculantes 120, 121 va entraîner le déplacement des tiges 131 et par conséquent le déploiement ou le rabattement des volets articulés 130 suivant que les moyens de raclage 5 sont amenés respectivement au contact ou à distance de la surface du sol.

Dans la pratique, le moteur électrique 127 actionnant le vérin 122 est alimenté par les batteries 19 initialement destinées à fournir l'électricité nécessaire à la propulsion du dispositif de raclage 1. Il est de plus avantageusement commandé par les moyens électroniques chargés de gérer le fonctionnement de l'ensemble des éléments électriques et/ou électroniques montés sur le racleur.

## Revendications

1. Dispositif de raclage (1) automoteur destiné à l'élimination de déchets présents à la surface (3) d'un couloir d'exercices (30) d'une étable, comportant des moyens moteurs (15) aptes à entraîner en rotation au moins une roue motrice (13) agissant par adhérence et exerçant son action directement sur la surface (3) à traiter, des moyens de guidage (80) permettant de suivre une trajectoire déterminée dans le couloir d'exercices (30), ainsi que des moyens de raclage (5) aptes à venir au contact de la surface (3) à traiter afin de désolidariser puis de pousser les déchets lors de l'avance du dispositif de raclage (1), caractérisé en ce que ledit dispositif de raclage (1) présente un centre de gravité situé à proximité de l'axe de rotation de chaque roue motrice (13), c'est-à-dire à une distance inférieure au rayon de ladite roue motrice (13).

2. Dispositif de raclage (1) selon la revendication 1, caractérisé en ce qu'il présente, parallèlement à la direction de déplacement, une largeur inférieure à la valeur correspondant à deux fois le diamètre de chaque roue motrice (13).

3. Dispositif de raclage (1) selon l'une des revendications 1 ou 2, caractérisé en ce qu'il présente une hauteur sensiblement égale au diamètre de chaque roue motrice (13).

4. Dispositif de raclage (1) selon l'une quelconque des revendications 1 à 3, caractérisé en ce que l'action des moyens de guidage (80) s'exerce au niveau d'une zone située en avant de l'axe de rotation de chaque roue motrice (13), quel que soit le sens de déplacement dudit dispositif de raclage (1).

5. Dispositif de raclage (1) selon l'une quelconque des revendications 1 à 4, caractérisé en ce que les moyens de guidage (80) comportent un élément support (81) fixe sous lequel est montée mobile une lame de guidage (82) apte à coopérer par glissement avec une rainure (83) ménagée à la surface (3) de l'aire de raclage, le déplacement relatif de la lame de guidage (82) par rapport à l'élément support (81) étant longitudinalement et transversalement limité dans l'espace, la mobilité longitudinale étant totalement libre alors que la mobilité transversale est localisée à la partie de ladite lame de guidage (82) située en arrière de l'axe de rotation de chaque roue motrice (13) pour un sens de déplacement donné.

6. Dispositif de raclage (1) selon la revendication 5, caractérisé en ce que la lame de guidage (82) présente deux pattes (90, 91) aptes à coopérer avec deux lumières (84, 85) ménagées longitudinalement et en vis-à-vis aux deux extrémités (86, 87) de l'élément support (81) afin de permettre le déplacement relatif de ladite lame de guidage (82) par rapport audit élément support (81), l'extrémité (92, 93) la plus externe de chacune desdites lumières (84, 85) présentant une largeur supérieure à l'épaisseur de la patte (90, 91) correspondante, l'extrémité (94, 95) la plus interne disposant de dimensions sensiblement identiques.

7. Dispositif de raclage (1) selon l'une quelconque des revendications 1 à 6, caractérisé en ce que les roues motrices (13) sont alignées suivant un axe de rotation unique, et en ce que ledit dispositif de raclage (1) comporte des moyens de stabilisation aptes à le bloquer en rotation par rapport audit axe.

8. Dispositif de raclage (1) selon la revendication 7, caractérisé en ce que les moyens de stabilisation sont constitués par les moyens de guidage (80).

9. Dispositif de raclage (1) selon l'une quelconque des revendications 1 à 8, caractérisé en ce que les moyens de raclage (5) sont montés flottants, c'est-à-dire mobiles en translation dans un plan sensiblement vertical de manière à venir au contact de la surface (3) à traiter par simple gravité.

10. Dispositif de raclage (1) selon l'une quelconque des revendications 1 à 9, caractérisé en ce que, lors de la poussée, le point d'appui principal des moyens de raclage (5) sur le bâti 2 est situé à la partie la plus basse dudit bâti (2).

11. Dispositif de raclage (1) selon l'une quelconque des revendications 1 à 10, caractérisé en ce qu'il comporte des moyens de levage (40) aptes à relever les moyens de raclage (5) par rapport à la surface (3) à traiter.

12. Dispositif de raclage (1) selon la revendication 11, caractérisé en ce que les moyens de levage (40) comportent au moins une pièce basculante (120, 121) montée mobile en rotation sur le châssis (2) et actionnée par un vérin (122), chaque pièce basculante (120, 121) étant apte à entraîner en déplacement les moyens de raclage (5) entre une position baissée et une position relevée dans lesquelles lesdits moyens de raclage (5) sont respectivement au contact et à distance de la surface du sol.

13. Dispositif de raclage (1) selon la revendication 11, caractérisé en ce que les moyens de levage (40) comportent une pièce support (45) sur laquelle sont solidarisés les moyens de raclage (5), la pièce support (45) apte à coulisser verticalement par rapport au bâti (2) étant entraînée vers le haut lors d'une marche arrière par une came pivotante (43) montée en rotation autour de l'axe d'au moins une roue motrice (13), la pièce support (45) étant maintenue en position haute par un levier de déverrouillage (52) dont le basculement, apte à libérer ladite pièce support (45), est commandé lors d'une marche avant par la mise en rotation de ladite roue motrice (13), via une roue dentée (41) coopérant par contact avec un doigt (57) respectivement solidaire d'un arbre de transmission (14) et articulé à une extrémité du levier de déverrouillage (52).

14. Dispositif de raclage (1) selon l'une quelconque des revendications 1 à 13, caractérisé en ce que les moyens de raclage (5) sont constitués par une lame (20) disposée sur chant parallèlement à l'axe de rotation de chaque roue motrice (13), chacune des deux extrémités latérales de ladite lame (20) étant pourvue d'un volet articulé (21, 22, 130).

15. Dispositif de raclage (1) selon la revendication 14, caractérisé en ce que les volets (21, 22) coopèrent avec un mécanisme d'ouverture forcée commandé par la mise en rotation en marche avant d'au moins une roue motrice (13).

16. Dispositif de raclage (1) selon la revendication 15, caractérisé en ce que le mécanisme d'ouverture forcée comporte pour chaque volet (21, 22) une masse mobile (70) montée basculante par rapport au bâti (2), une tige (72) reliant la masse mobile (70) à une partie (73) dudit volet (21, 22) située en arrière de son axe de rotation (74), le basculement de ladite masse mobile (70) étant contrôlé par le déplacement verticale de la pièce support (45), lui-même commandé par la mise en rotation en marche avant d'au moins une roue motrice (13).

17. Dispositif de raclage (1) selon la revendication 14, caractérisé en ce que les volets (21, 22) coopèrent avec un mécanisme d'ouverture forcée commandé par la mise en fonctionnement des moyens de levage (40).

18. Dispositif de raclage (1) selon la revendication 17, caractérisé en ce que le mécanisme d'ouverture forcée comporte pour chaque volet (130) une tige (131) dont une extrémité est montée mobile en rotation sur une des pièces basculantes (120, 121), l'autre extrémité étant reliée à une partie dudit volet (130) située en arrière de son axe de rotation.

19. Dispositif de raclage (1) selon l'une quelconque des revendications 1 à 13, caractérisé en ce que les moyens de raclage (5) sont constitués par deux lames rétractables (110, 111) disposées sur chant parallèlement à l'axe de rotation de chaque roue motrice (13), lesdites lames (110, 111) étant montées mobiles en translation longitudinale l'une par rapport à l'autre et coopérant avec au moins un moyen de rappel élastique apte à les repousser mutuellement dans des directions opposées, parallèles audit axe de rotation.

20. Dispositif de raclage (1) selon la revendication 19, caractérisé en ce que les extrémités internes des deux lames (110, 111) se chevauchent partiellement de manière permanente.

21. Dispositif de raclage (1) selon l'une quelconque des revendications 1 à 20, caractérisé en ce qu'il comporte à sa partie supérieure des moyens de détection d'obstacles (100) aptes à déclencher une procédure de sécurité.

22. Dispositif de raclage (1) selon la revendication 21, caractérisé en ce que les moyens de détection d'obstacles (100) comportent un élément mobile (106) coopérant par contact avec un élément statique (105), solidaire du bâti (2), lorsque ledit élément mobile (106) entre en contact avec un obstacle (107).

23. Dispositif de raclage (1) selon la revendication 22, caractérisé en ce que l'élément mobile (106) est constitué par le couvercle (12) monté flottant à la partie supérieure du bâti (2), dans un plan horizontal et suivant la direction de déplacement du dispositif de raclage (1).

24. Dispositif de raclage (1) selon l'une quelconque des revendications 1 à 23, caractérisé en ce qu'il comporte des moyens électroniques aptes à gérer le fonctionnement de l'ensemble des éléments le composant.

25. Dispositif de raclage (1) selon l'une quelconque des revendications 1 à 24, caractérisé en ce que les moyens moteurs (15, 127) sont alimentés par une source énergétique (19) stockée à même le dispositif de raclage (1).

## Claims

1. Automotive scraper device (1) intended to remove waste present on the surface (3) of an exercise passage (30) of a cattle shed including drive means (15) able to rotate at least one drive wheel (13) acting by grip and applying its action directly to the surface (3) to be treated, guiding means (80) permitting a determined path to be followed in the exercise passage (30), and scraper means (5) able to come into contact with the surface (3) to be treated in order to detach and then push the waste on advance of the scraper device (1), characterised by the fact that the said scraper device (1) has a centre of gravity situated in the proximity of the axis of rotation of each drive wheel (13), i.e. at a distance less than the radius of the said drive wheel (13).

2. Scraper device (1) as described in claim 1, characterised by the fact that it has, parallel with the direction of displacement, a width less than the value corresponding to two times the diameter of each drive wheel (13).

3. Scraper device (1) as described in either of claims 1 or 2, characterised by the fact that it has a height substantially equal to the diameter of each drive wheel (13).

4. Scraper device (1) as described in any one of claims 1 to 3, characterised by the fact that the action of the guiding means (80) is applied at the level of a zone situated in front of the axis of rotation of each drive wheel (13), whatever the direction of displacement of the said scraper device (1).

5. Scraper device (1) as described in any one of claims 1 to 4, characterised by the fact that the guiding means (80) include a fixed support element (81) under which is mounted mobile a guiding blade (82) able to co-operate by sliding with a groove (83) formed in the surface (3) of the scraping area, the relative displacement of the guiding blade (82) and the support (81) being longitudinally and transversally limited in space, the longitudinal mobility being entirely free while the transversal mobility is restricted to the part of the said guiding blade (82) situated to the rear of the axis of rotation of each drive wheel (13) for a given direction of displacement.

6. Scraper device (1) as described in claim 5, characterised by the fact that the guiding blade (82) has two tongues (90, 91) able to co-operate with two apertures (84, 85) formed longitudinally and opposite the two ends (86, 87) of the support element (81) in order to the allow the relative displacement of the said guiding blade (82) and the said support element (81), the outermost end (92, 93) of each of the said apertures (84, 85) having a breadth greater than the thickness of the corresponding tongue (90, 91), the innermost end (94, 95) having substantially identical dimensions.

7. Scraper device (1) as described in any one of claims 1 to 6, characterised by the fact that the drive wheels (13) are aligned along a single axis of rotation, and by the fact that the said scraper device (1) includes stabilising means able to prevent its rotation relative to the said axis.

8. Scraper device (1) as described in claim 7, characterised by the fact that the stabilising means are formed by the guiding means (80).

9. Scraper device (1) as described in any one of claims 1 to 8, characterised by the fact that the scraper means (5) are mounted to float, i.e. are mobile in translation in a substantially vertical plane so as to come into contact with the surface (3) to be treated simply through gravity.

10. Scraper device (1) as described in any one of claims 1 to 9, characterised by the fact that, during pushing, the principal bearing point of the scraper means (5) on the frame 2 is situated in the lowest part of the said frame (2).

11. Scraper device (1) as described in any one of claims 1 to 10, characterised by the fact that it includes lifting means (40) able to lift the scraper means (5) relative to the surface (3) to be treated.

12. Scraper device (1) as described in claim 11, characterised by the fact that the lifting means (40) include at least one rocking piece (120, 121) mounted mobile in rotation on the frame (2) and operated by a ram (122), each rocking piece (120, 121) being able to displace the scraper means (5) between a lowered position and a raised position in which the said scraper means (5) are in contact with and at a distance from the surface of the ground respectively.

13. Scraper device (1) as described in claim 11, characterised by the fact that the lifting means (40) include a support piece (45) onto which the scraper means (5) are firmly attached, the support piece (45) able to slide vertically relative to the frame (2) being driven upwardly on reversing by a pivoting cam (43) mounted to rotate about the axis of at least one drive wheel (13), the support piece (45) being held in the upper position by a releasing lever (52) the swivelling of which, able to release the said support piece (45), is caused on forward motion by the rotation of the said drive wheel (13), via a toothed wheel (41) co-operating by contact with a pawl (57) firmly attached to a transmission shaft (14) and hinged to one end of the release lever (52) respectively.

14. Scraper device (1) as described in any one of claims 1 to 13, characterised by the fact that the scraper means (5) are formed by a blade (20) arranged on edge parallel with the axis of rotation of each drive wheel (13), each of the two lateral ends of the said blade (20) being provided with a hinged flap (21, 22, 130).

15. Scraper device (1) as described in claim 14, characterised by the fact that the flaps (21, 22) co-operate with a forced opening mechanism operated by the forward rotation of at least on drive wheel (13).

16. Scraper device (1) as described in claim 15, characterised by the fact that the forced opening mechanism includes for each flap (21, 22) a mobile mass (70) mounted to swivel relative to the frame (2), a rod (72) connecting the mobile mass (70) to a part (73) of the said flap (21, 22) situated to the rear of its axis of rotation (74), the swivelling of the said mobile mass (70) being controlled by the vertical displacement of the support piece (45), itself caused by the forward rotation of at least one drive wheel (13).

17. Scraper device (1) as described in claim 14, characterised by the fact that the flaps (21, 22) co-operate with a forced opening mechanism operated by the functioning of the lifting means (40).

18. Scraper device (1) as described in claim 17, characterised by the fact that the forced opening mechanism includes for each flap (130) a rod (131) one end of which is mounted mobile in rotation on one of the rocking pieces (120, 121), the other end being mounted on a part of the said flap (130) situated to the rear of its axis of rotation.

19. Scraper device (1) as described in any one of claims 1 to 13, characterised by the fact that the scraper means (5) are formed by two retractable blades (110, 111) arranged on edge parallel with the axis of rotation of each drive wheel (13), the said blades (110, 111) being mounted mobile in longitudinal translation relative to each other and co-operating with at least one elastic return means able to push them mutually in opposite directions, parallel with the said axis of rotation.

20. Scraper device (1) as described in claim 19, characterised by the fact that the inner ends of the two blades (110, 111) partially overlap in permanent manner.

21. Scraper device (1) as described in any one of claims 1 to 20, characterised by the fact that it includes in its upper part obstacle detection means (100) able to initiate a safety procedure.

22. Scraper device (1) as described in claim 21, characterised by the fact that the obstacle detection means (100) include a mobile element (106) co-operating by contact with a static element (105), firmly attached to the frame (2), when the said mobile element (106) enters into contact with an obstacle (107).

23. Scraper device (1) as described in claim 22, characterised by the fact that the mobile element (106) consists of the cover (12) mounted to float at the upper part of the frame (2), in a horizontal plane following the direction of displacement of the scraper device (1).

24. Scraper device (1) as described in any one of claims 1 to 23, characterised by the fact that it includes electronic means able to manage the operation of all the elements of which it is composed.

25. Scraper device (1) as described in any one of claims 1 to 24, characterised by the fact that the drive means (15, 127) are supplied by an energy source (19) stored on the scraper device (1) itself.

## Patentansprüche

1. Selbstfahrendes Räumgerät (1) zur Beseitigung von an der Oberfläche (3) eines Arbeitskorridors (30) in einem Stall vorhandenem Viehdung, das Antriebsmittel (15), die mindestens ein Antriebsrad (13) in Drehung versetzen können, welches durch Haften wirkt und seine Wirkung direkt auf die zu behandelnde Fläche (3) ausübt, Führungsmittel (80), die es ermöglichen, einem bestimmten Streckenverlauf im Arbeitskorridor (30) zu folgen, sowie Räummittel (5) aufweist, die mit der zu behandelnden Fläche (3) in Kontakt gelangen, um den Viehdung bei der Vorwärtsbewegung des Räumgeräts (1) zu lösen und dann zu schieben, dadurch gekennzeichnet, daß das Räumgerät (1) einen Schwerpunkt aufweist, der sich in der Nähe der Drehachse jedes durch Haften wirkenden Antriebsrads (13) befindet, d.h. in einer Entfernung, die geringer ist als der Radius dieses Antriebsrads (13).

2. Räumgerät (1) nach Anspruch 1, dadurch gekennzeichnet, daß es parallel zur Bewegungsrichtung eine Breite aufweist, die geringer ist als der Wert, der dem doppelten Durchmesser jedes Antriebsrads (13) entspricht.

3. Räumgerät (1) nach einem der Ansprüche 1 oder 2, dadurch gekennzeichnet, daß es eine Höhe im wesentlichen gleich dem Durchmesser jedes Antriebsrads (13) aufweist.

4. Räumgerät (1) nach einem beliebigen der Ansprüche 1 bis 3, dadurch gekennzeichnet, daß die Führungsmittel (80) in Höhe einer Zone wirken, die sich vor der Drehachse Jedes Antriebsrads (13) befindet, unabhangig von der Bewegungsrichtung des Räumgeräts (1).

5. Räumgerät (1) nach einem beliebigen der Ansprüche 1 bis 4, dadurch gekennzeichnet, daß die Führungsmittel (80) ein festes Trägerelement (81) aufweisen, unter dem eine Führungsschiene (82) beweglich angeordnet ist, die durch Gleiten mit einer an der Oberfläche (3) der Räum-Grundfläche ausgebildeten Rille (83) zusammenwirken kann, wobei die relative Verschiebung der Führungsschiene (82) in Bezug auf das Trägerelement (81) in Längs- und Querrichtung im Raum begrenzt ist, wobei die Längsbeweglichkeit völlig frei ist, während die Querbeweglichkeit für eine gegebene Verschieberichtung auf den Bereich der Führungsschiene (82) hinter der Drehachse jedes Antriebsrads (13) beschränkt ist.

6. Räumgerät (1) nach Anspruch 5, dadurch gekennzeichnet, daß die Führungsschiene (82) zwei Laschen (90, 91) aufweist, welche mit zwei Langlöchern (84, 85) zusammenwirken können, die in Längsrichtung und einander gegenüber an den beiden Enden (86, 87) des Trägerelements (81) angeordnet sind, um die relative Verschiebung der Führungsschiene (82) in Bezug auf das Trägerelement (81) zu ermöglichen, wobei das äußerste Ende (92, 93) jedes Langlochs (84, 85) breiter ist als die Stärke der entsprechenden Lasche (90, 91), während das innerste Ende (94, 95) im wesentlichen gleiche Abmessungen aufweist.

7. Räumgerät (1) nach einem beliebigen der Ansprüche 1 bis 6, dadurch gekennzeichnet, daß die Antriebsräder (13) gemäß einer einzigen Drehachse fluchten, und daß das Räumgerät (1) Stabilisierungsmittel aufweist, die es in Bezug auf die Achse in Drehung blockieren können.

8. Räumgerät (1) nach Anspruch 7, dadurch gekennzeichnet, daß die Stabilisierungsmittel aus den Führungsmitteln (80) bestehen.

9. Räumgerät (1) nach einem beliebigen der Ansprüche 1 bis 8, dadurch gekennzeichnet, daß die Räummittel (5) schwebend, d.h. in einer im wesentlichen senkrechten Ebene translationsbeweglich montiert sind, um durch einfache Schwerkraft mit der zu behandelnden Fläche (3) in Kontakt zu gelangen.

10. Räumgerät (1) nach einem beliebigen der Ansprüche 1 bis 9, dadurch gekennzeichnet, daß beim Schub der Hauptauflagepunkt der Räummittel (5) auf dem Gestell (2) sich im untersten Bereich des Gestells (2) befindet.

11. Räumgerät (1) nach einem beliebigen der Ansprüche 1 bis 10, dadurch gekennzeichnet, daß es Hubmittel (40) aufweist, die die Räummittel (5) in Bezug auf die zu behandelnde Fläche (3) anheben können.

12. Räumgerät (1) nach Anspruch 11, dadurch gekennzeichnet, daß die Hubmittel (40) mindestens ein kippbares Bauteil (120, 121) aufweisen, das drehbeweglich auf dem Gestell (2) montiert ist und von einem Hubzylinder (122) betätigt wird, wobei jedes kippbare Bauteil (120, 121) die Räummittel (5) zwischen einer abgesenkten und einer angehobenen Stellung in Bewegung versetzen kann, in denen die Räummittel (5) mit der Bodenoberfläche in Kontakt bzw. von ihr entfernt sind.

13. Räumgerät (1) nach Anspruch 11, dadurch gekennzeichnet, daß die Hubmittel (40) ein Stützteil (45) aufweisen, mit dem die Räummittel (5) fest verbunden sind, wobei das Stützteil (45), das in Bezug auf das Gestell (2) senkrecht gleiten kann, bei einem Rückwärtsgang durch eine schwenkbare Nocke (43) nach oben gezogen wird, die um die Achse mindestens eines Antriebsrads (13) drehbar montiert ist, wobei das Stützteil (45) durch einen Entriegelungshebel (52) in der hohen Stellung gehalten wird, dessen Kippen, das das Stützteil (45) freigeben kann, bei einem Vorwärtsgang durch das Indrehungversetzen des Antriebsrads (13) über ein Zahnrad (41) gesteuert wird, das durch Kontakt mit einem Finger (57) mitwirkt, der fest mit einer Antriebswelle (14) verbunden und an ein Ende des Entriegelungshebels (52) angelenkt ist.

14. Räumgerät (1) nach einem beliebigen der Ansprüche 1 bis 13, dadurch gekennzeichnet, daß die Räummittel (5) aus einem Schild (20) bestehen, der mit der Schmalseite parallel zur Drehachse jedes Antriebsrads (13) angeordnet ist, wobei jedes der beiden seitlichen Enden des Schilds (20) mit einem angelenkten Flügel (21, 22, 130) versehen ist.

15. Räumgerät (1) nach Anspruch 14, dadurch gekennzeichnet, daß die Flügel (21, 22) mit einem Mechanismus zur gesteuerten Öffnung zusammenwirken, der durch das Indrehungversetzen im Vorwärtsgang mindestens eines Antriebsrads (13) gesteuert wird.

16. Räumgerät (1) nach Anspruch 15, dadurch gekennzeichnet, daß der Mechanismus zur gesteuerten Öffnung für jeden Flügel (21, 22) eine bewegliche Masse (70) aufweist, die in Bezug auf das Gestell (2) schwenkbar montiert ist, wobei eine Stange (72) die bewegliche Masse (70) mit einem Bereich (73) des Flügels (21, 22) verbindet, der sich hinter seiner Drehachse (74) befindet, wobei das Schwenken der beweglichen Masse (70) durch die senkrechte Bewegung des Stützteils (45) gesteuert wird, das selbst durch das Indrehungversetzen im Vorwärtsgang mindestens eines Antriebsrads (13) gesteuert wird.

17. Räumgerät (1) nach Anspruch 14, dadurch gekennzeichnet, daß die Flügel (21, 22) mit einem Mechanismus zur gesteuerten Öffnung zusammenwirken, der durch das Inbetriebsetzen der Hubmittel (40) gesteuert wird.

18. Räumgerät (1) nach Anspruch 17, dadurch gekennzeichnet, daß der Mechanismus zur gesteuerten Öffnung für jeden Flügel (130) eine Stange (131) aufweist, deren eines Ende drehbeweglich auf eines der schwenkbaren Bauteile (120, 121) montiert ist, während das andere Ende mit einem Bereich des Flügels (130) verbunden ist, der sich hinter seiner Drehachse befindet.

19. Räumgerät (1) nach einem beliebigen der Ansprüche 1 bis 13, dadurch gekennzeichnet, daß die Räummittel (5) aus zwei einziehbaren Schilden (110, 111) bestehen, die mit der Schmalseite parallel zur Drehachse jedes Antriebsrads (13) angeordnet sind, wobei die Schilde (110, 111) in Längstranslationsrichtung zueinander beweglich montiert sind und mit mindestens einem elastischen Rückholmittel zusammenwirken, das sie gegenseitig in entgegengesetzte Richtungen parallel zur Drehachse zurückstoßen kann.

20. Räumgerät (1) nach Anspruch 19, dadurch gekennzeichnet, daß die inneren Enden der beiden Schilde (110, 111) einander permanent teilweise überlappen.

21. Räumgerät (1) nach einem beliebigen der Ansprüche 1 bis 20, dadurch gekennzeichnet, daß es in seinem oberen Bereich Mittel zur Erfassung von Hindernissen (100) aufweist, die eine Sicherungsprozedur auslösen können.

22. Räumgerät (1) nach Anspruch 21, dadurch gekennzeichnet, daß die Mittel zur Erfassung von Hindernissen (100) ein bewegliches Element (106) aufweisen, das durch Kontakt mit einem fest mit dem Gestell (2) verbundenen statischen Element (105) zusammenwirkt, wenn das bewegliche Element (106) mit einem Hindernis (107) in Kontakt gelangt.

23. Räumgerät (1) nach Anspruch 22, dadurch gekennzeichnet, daß das bewegliche Element (106) aus dem Deckel (12) besteht, der schwebend im oberen Bereich des Gestells (2) in einer waagrechten Ebene und gemäß der Bewegungsrichtung des Räumgeräts (1) montiert ist.

24. Räumgerät (1) nach einem beliebigen der Ansprüche 1 bis 23, dadurch gekennzeichnet, daß es elektronische Mittel aufweist, die den Betrieb der Gesamtheit der es bildenden Elemente steuern können.

25. Räumgerät (1) nach einem beliebigen der Ansprüche 1 bis 24, dadurch gekennzeichnet, daß die Antriebsmittel (15, 127) von einer Energiequelle (19) gespeist werden, die innerhalb des Räumgeräts (1) gelagert ist.
